# EUROPEAN PATENT APPLICATION

(11) **EP 1 712 912 A1**
(43) Date of publication of application: **18.10.2006**
(21) Application number: 04807993.3
(22) Date of filing: 28.12.2004
(51) Int. Cl.: G01N 33/53, G01N 37/00, G01N 33/543

(54) **REACTION VESSEL UTILIZING ARTICLE HAVING THREE-DIMENSIONALLY ARRANGED PARTICLES AND REACTION APPARATUS**

(30) Priority: 30.12.2003 US 533391 P
(71) Applicant: Universal Bio Research Co., Ltd., Matsudo-shi, Chiba 271-0064 (JP)
(72) Inventor: TAJIMA, Hideji, Matsudo-shi, Chiba 2710064 (JP); STIMPSON, Donald, I., 67059 (US)
(74) Representative: Bohnenberger, Johannes
(86) International application number: PCT/JP2004/019638
(87) International publication number: WO 2005/064334

(57) **Abstract**

It is an object of the present invention to provide a reaction vessel comprising a three-dimensional particle array, with which reaction efficiency is increased by raising the probability of encounter between the target substance in the liquid sample and the reactive substance immobilized on the particle surface, and a reaction apparatus in which said reaction vessel is utilized. The reaction vessel provided by the present invention comprises a reaction vessel main body having a reaction chamber capable of accommodating a liquid sample, a solid support placed in the reaction chamber, and a plurality of particles on which a specific reactive substance is immobilized, wherein the particles are arranged in three dimensions inside the reaction chamber while immobilized on the surface of the solid support.

## Description

### BACKGROUND OF THE INVENTION

### 1. Field of the Invention

The present invention relates to a reaction vessel and a reaction apparatus that make use of a three-dimensional array of particles having a specific reactive substance immobilized on their surface. The present invention also relates to a method for producing a three-dimensional particle array.

### 2. Description of the Related Art

A solid support on which is immobilized a probe having a base sequence that is complementary to a target nucleic acid is used in the detection, separation, and so forth of the target nucleic acid. For instance, the detection, separation, and so forth of target nucleic acids are carried out by bringing a solid support on which a probe has been immobilized into contact with a liquid sample containing the target nucleic acid, hybridizing the probe and the target nucleic acid, and then removing substances other than the target nucleic acid by washing or the like.

An example of a solid support on which a probe has been immobilized is a DNA array (DNA chip) comprising numerous probes arranged and immobilized on the surface of a solid support such as a slide glass. These DNA arrays are extremely useful in the parallel analysis of gene expression, mutation, polymorphism, and so on.

Examples of known methods for producing a DNA array include a method in which an oligonucleotide (used as a probe) is synthesized directly on a solid support surface, and a method in which a previously prepared oligonucleotide (and in some cases a polynucleotide) is immobilized on a solid support surface.

A typical example of the former method is to selectively synthesize a probe in a specific region of a matrix by combining the use of protective groups selectively removed by optical irradiation, with solid phase synthesis technology and photolithographic technology utilized in the manufacture of semiconductors.

Typical examples of the latter method are (1) spotting cDNA or a PCR product onto the surface of a solid support that has been surface treated with a polycation (polylysine, polyethyleneimine, etc.), and utilizing the charge of DNA to electrostatically bind it to the solid support, and (2) synthesizing an oligonucleotide in which reactive groups have been introduced, spotting said oligonucleotide onto a surface-treated solid support surface, and covalently binding it to the solid support surface.

The latter method is more commonly used to produce DNA arrays because the former method entails such a complicated process, which leads to higher cost and so forth.

To increase the detection sensitivity of a target nucleic acid, the probe density per spot must be as high as possible. With the latter method, the probe is spotted onto the solid support surface by dropping a probe-containing liquid onto the solid support surface, so the probe density per spot is a function of the amount of probe per spot.

Directly synthesizing a probe on a solid support surface is not the only way to increase the amount of probe per spot, which can also be accomplished by gathering probes into particles, and then immobilizing these clustered probe particles in one or two dimensions on the solid support surface (see, for example, U.S. Patent 6,133,436 and Japanese Laid-Open Patent Applications 2001-281251, 2000-346842, and H11-243997).

### SUMMARY OF THE INVENTION

However, with the above method featuring clustered probe particles, since the clustered probe particles were immobilized in one or two dimensions, the reaction sites between the clustered probe particles and the liquid sample containing the target nucleic acid were also one or two-dimensional. Specifically, even though the target nucleic acid was dispersed in the liquid sample (that is, it was present three-dimensionally in the liquid sample), since the clustered probe particles were arranged one- or two-dimensionally, there was a lower probability that the two would come into contact, so the reaction efficiency was low.

In view of this, it is a first object of the present invention to provide a reaction vessel comprising a three-dimensional particle array, with which reaction efficiency is increased by raising the probability of encounter between the target substance in the liquid sample and the reactive substance immobilized on the particle surface, and a reaction apparatus in which said reaction vessel is utilized.

It is a second object of the present invention to provide a method for producing a three-dimensional particle array, with which a three-dimensional particle array can be produced more efficiently.
(1) To solve the above problems, the reaction vessel of the present invention comprises a reaction vessel main body having a reaction chamber capable of accommodating a liquid sample, a solid support placed in the reaction chamber, and a plurality of particles on which a specific reactive substance is immobilized, wherein the particles are arranged in three dimensions inside the reaction chamber while immobilized on the surface of the solid support.
   With the reaction vessel of the present invention, the reaction chamber becomes the reaction site between the target substance in the liquid sample and the reactive substance on the particle surface. When the liquid sample is placed in the reaction chamber, the target substance in the liquid sample disperses within the reaction chamber, so that it is present in three dimensions in the reaction chamber. Since the particles on whose surface the reactive substance has been immobilized are arranged three-dimensionally in the reaction chamber, the reaction site between the target substance in the liquid sample and the reactive substance on the particle surface is also three-dimensional, so there is a greater probability that the two will come into contact, and the reaction efficiency between the two is improved.
   "Liquid sample" as used here means the liquid supplied to a test, assay, analysis, etc., and a liquid containing the target substance, or a liquid that may contain the target substance, is suitably selected according to the test, assay, analysis, etc., being performed using the reaction vessel of the present invention. Terms defined in this Specification are used with the same meaning throughout the entire Specification.
   "Target substance" as used here means the substance that is the object of detection, separation, etc., and a substance with a known or unknown structure, function, etc., is suitably selected according to the test, assay, analysis, etc., being performed using the reaction vessel of the present invention. There are no particular restrictions on the type of target substance, but specific examples include nucleic acids, proteins, antigens, antibodies, enzymes, sugar chain and other biological substances. "Nucleic acid" includes DNA and RNA, as well as analogs or derivatives of these (such as peptide nucleic acids (PNA) and phosphorothioate DNA). Nor are there any particular restrictions on the base length of the nucleic acid, which may be either an oligonucleotide or a polynucleotide. Also, the nucleic acid may be in the form of a single chain or a double chain, or a mixture of these.
   "Reactive substance" as used here means the substance reacted with the target substance, and a substance that is reactive with the target substance, or that may be reactive with the target substance, is suitably selected according to the test, assay, analysis, etc., being performed using the reaction vessel of the present invention. There are no particular restrictions on the type of reactive substance, and it may be a substance with a known or unknown structure, function, etc. The reactivity that the reactive substance has (or may have) with the target substance may be any kind of reactivity, but examples include the property of bonding with the target substance by means of covalent bonds, ion bonds, ver der Waals' force, hydrogen bonds, coordination bonds, chemical adsorption, physical adsorption, and other such bonding mechanisms. Specific examples of combinations of target substance and reactive substance include nucleic acid/complementary nucleic acid, receptor protein/ligand, enzyme/substrate, and antibody/antigen.
   There are no particular restrictions on the number of reactive substances immobilized on the surface of the particles, but it is preferable for a plurality of reactive substances to be immobilized on the surface of the particles, that is, for reactive substances to be clustered together on the surface of the particles.
   "Specific reactive substance" as used here means that the type of reactive substance to be immobilized on the surface of the particles is decided ahead of time. One or more types of reactive substance may be immobilized on the surface of the particles.
   "Solid support" as used here means a three-dimensional structure that allows particles to be immobilized on its surface, and there are no particular restrictions on the shape, size, and so forth thereof as long as this support can be accommodated in the reaction chamber. The material of the solid support is one that is insoluble in the liquid sample, and can be suitably selected according to the type of solvent of the liquid sample and other such factors. Specific examples of the material of the solid support generally include plastic (such as polyethylene, polypropylene, polyamide, and polyvinylidene difluoride), metal (such as iron, gold, silver, copper, aluminum, nickel, cobalt, and silicon), glass, ceramic, and composites of these. The solid support is preferably non-swellable, but may be swellable. The solid support surface may be either porous or non-porous, but more particles can be immobilized on the solid support when the solid support surface is porous than when it is non-porous.
   "Particle" as used here means a microscopic, three-dimensional structure that allows a reactive substance to be immobilized on its surface, and there are no particular restrictions on the shape, size, and so forth thereof. The shape of the particles is spherical, for example, and the diameter is preferably approximately 1 µm to approximately 100 µm. The material of the particles is one that is insoluble in the liquid sample, and can be suitably selected according to the type of solvent of the liquid sample and other such factors. Specific examples of the material of the particles generally include polymers obtained by polymerizing one or more vinyl-based monomers such as aromatic vinyl compounds, α,β-unsaturated carboxylic acid esters and amides, α,β-unsaturated nitrile compounds, halogenated vinyl compounds, conjugated diene compounds and lower fatty acid vinyl esters (for example, styrene, chlorostyrene, chloromethylstyrene, α-methylstyrene, divinylbenzene, sodium styrenesulfonate, (meth)acrylic acid, methyl (meth)acrylate, ethyl (meth)acrylate, n-butyl (meth)acrylate, 2-hydroxyethyl (meth)acrylate, polyoxyethylene (meth)acrylate, glycidyl (meth)acrylate, ethylene glycol di(meth)acrylic esters, tribromophenyl (meth)acrylate, tribromopropyl acrylate, (meth)acrylonitrile, (meth)acrolein, (meth)acrylamide, methylenebis(meth)acrylamide, butadiene, isoprene, vinyl acetate, vinylpyridine, N-vinylpyrrolidone, vinyl chloride, vinyl bromide); crosslinked polysaccharides such as agarose, dextran, cellulose, and carboxymethyl cellulose; crosslinked proteins such as methylated albumin, gelatin, collagen, and casein; inorganic materials such as glass and ceramic; metals such as iron and silicon; and composites of these. The particles are preferably non-swellable, but may be swellable. The particle surface may be either porous or non-porous, but more reactive substance can be immobilized when the particle surface is porous than when it is non-porous.
   The "surface" of the solid support or particles means the portion that can come into contact with a liquid (such as the liquid sample), and includes not only the outer portion (exterior surface) of the solid support or particles, but also the inner portion (interior surface) of the solid support or particles to which a liquid can penetrate (such as the interior surface of pores had by the solid support or particles).
   There are no particular restrictions on the structure of the reaction chamber as long as it is capable of accommodating the liquid sample, but this reaction chamber can be formed in the reaction vessel main body as a recess having an opening at its upper end. If the reaction chamber has an opening, the reaction vessel of the present invention may be equipped with a lid member for sealing off the opening to the reaction chamber. There are no particular restrictions on the number of reaction chambers, and one or more may be used. It is preferable for the reaction chamber to be constituted by thin sheets. This allows the temperature of the liquid sample inside the reaction chamber to be controlled more quickly and efficiently, and also facilitates setting the irradiation conditions or light receiving conditions in the irradiation of the reaction chamber interior with light or the detection of light emitted from inside the reaction chamber.
   "The particles are arranged in three dimensions" means that the particles are arranged so that they do not all lie in the same plane.
   The immobilization of the particles to the solid support or of the reactive substance to the particles can be accomplished by a variety of binding mechanisms. Specific examples of binding mechanisms include specific interaction between streptavidin or avidin and biotin, hydrophobic interaction, magnetic interaction, polar interaction, the formation of covalent bonds (such as amide bonds, disulfide bonds, and thioether bonds), and crosslinking with a crosslinking agent. A known technique can be employed to perform appropriate chemical modification of the solid support surface, the particle surface, or the reactive substance so that immobilization by these binding mechanisms will be possible. The immobilization of the reactive substance to the particles may be performed after the particles have been immobilized on the solid support, but from the standpoint of simply and efficiently immobilizing the reactive substance on the particles, it is preferable for this immobilization to be performed before the particles are immobilized on the solid support.
   In addition to specific interaction between streptavidin or avidin and biotin, the immobilization of the particles to the solid support and the immobilization of the reactive substance to the particles can also be performed utilizing specific interactions between a maltose-bound protein and maltose, a polyhistidine peptide and a metal ion such as nickel or cobalt, glutathion-S-transferase and glutathion, calmodulin and a calmodulin-bound peptide, an ATP-bound protein and ATP, a nucleic acid and a complementary nucleic acid, a receptor protein and a ligand, an enzyme and a substrate, an antibody and an antigen, IgG and protein A, and so on.
   It is preferable for the binding mechanism between the solid support and the particles and that between the particles and the reactive substance to be one with which the binding partners (the solid support and particles, or the particles and reactive substance) will not readily separate. Examples of such binding mechanisms include interaction between avidin or streptavidin and biotin, the formation of covalent bonds, and crosslinking with a crosslinking agent.
   When interaction between avidin or streptavidin and biotin is utilized, for example, particles coated with avidin or streptavidin can be bound to a solid support coated with biotin. Also, a reactive substance into which biotin has been introduced (such as a biotinized nucleic acid obtained by performing PCR using a primer whose 5' terminal has been biotinized) can be bound to particles coated with avidin or streptavidin. It is also possible to reverse the avidin or streptavidin and biotin, so that particles coated with biotin can be bound to a solid support coated with avidin or streptavidin, for example. The same applies to the binding of the particles and the reactive substance.
   When the formation of covalent bonds is utilized, functional groups present on the solid support surface, the particle surface, or the reactive substance can be utilized to form the covalent bonds. Specific examples of functional groups capable of forming covalent bonds include a carboxyl group, amino group, and hydroxyl group. For instance, when carboxyl groups are present on the surface of the solid support, amide bonds can be formed between the solid support and the particles by activating the carboxyl groups with a carbodimide such as 1-ethyl-3-(3-dimethylaminopropyl)-3-ethylcarbodimide hydrochloride (EDC), and then reacting with the amino groups present on the surface of the particles. If amino groups are present on the surface of the solid support, then amide bonds can be formed between the solid support and the particles by using a cyclic acid anhydride such as succinic anhydride to convert the amino groups into carboxyl groups, and then reacting with the amino groups present on the surface of the particles. The binding of the particles and the reactive substance can be performed in the same manner. Further, if the reactive substance is a nucleic acid, it is preferable to bind the nucleic acid to the particles via a linker arrangement introduced at the 5' or 3' terminal of the nucleic acid so that the reactivity of the nucleic acid (the hybridizability with a complementary nucleic acid) will not be lost.
   When crosslinking with a crosslinking agent is utilized, any of a variety of crosslinking agents capable of reacting with the functional groups had by the substance to be crosslinked can be used. Specific examples of crosslinking agents include bifunctional reagents, trifunctional reagents, and other such polyfunctional reagents. Specific examples of these polyfunctional reagents include N-succinimidyl(4-iodoacetyl)aminobenzoate (SIAB), dimaleimide, dithio-bis-nitrobenzoic acid (DTNB), N-succinimidyl-S-acetyl-thioacetate (SATA), N-succinimidyl-3-(2-pyridyldithio) propionate (SPDP), succinimidyl 4-(N-maleimidomethyl)cyclohexane-1-carboxylate (SMCC), and 6-hydrazinonicotimide (HYNIC).
(2) In a first aspect of the reaction vessel of the present invention, a plurality of solid supports are placed in the reaction chamber, and the particles are arranged in one, two, or three dimensions on the surface of each of the supports.
   With the reaction vessel of the present invention, the number of solid supports placed in the reaction chamber may be just one or a plurality, but with the reaction vessel pertaining to this aspect, a plurality of solid supports are placed in the reaction chamber. If there is only one solid support placed in the reaction chamber, then the particles must be arranged three-dimensionally on the surface of a single solid support, but if a plurality of solid support are placed in the reaction chamber, then the particles can be arranged one-, two-, or three-dimensionally on the surface of each solid support. Specifically, with the reaction vessel pertaining to this aspect, the particles on the surface of each solid support are arranged three-dimensionally as a whole within the reaction chamber by combining particles arranged one-, two-, or three-dimensionally on the surface of each solid support. If the particles are arranged one- or two-dimensionally on the surface of each solid support, the positions of the solid support within the reaction chamber are adjusted so that the particles as a whole on the surface of each solid support will not lie within the same plane.
(3) In a second aspect of the reaction vessel of the present invention, the surface of the solid support comprises a curved surface or a plurality of non-coplanar flat surfaces, and the particles are either arranged in three dimensions on the curved surface or arranged in one or two dimensions on the plurality of flat surfaces.
   With the reaction vessel pertaining to this second aspect, if the surface of the solid support comprises a curved surface, since a curved surface spreads out three-dimensionally, the particles can be arranged three-dimensionally within the reaction chamber by arranging them three-dimensionally on the curved surface. Specific examples of a solid support comprising a curved surface include spiral members, members produced by bending a flexible sheet-like member, solid cylindrical members, hollow cylindrical members, and conical members.
   With the reaction vessel pertaining to this aspect, if the surface of the solid support comprises a plurality of non-coplanar flat surfaces, since a flat surface spreads out two-dimensionally, the particles will be arranged one- or two-dimensionally on each flat surface, but the particles as a whole can be arranged three-dimensionally within the reaction chamber by combining particles arranged one- or two-dimensionally on a plurality of non-coplanar flat surfaces. Specific examples of solid support having a plurality of non-coplanar flat surfaces include members produced by bending a flexible sheet-like member, solid prismatic members, hollow prismatic members, and pyramidal members.
   With the reaction vessel pertaining to this aspect, the surface of the solid support may comprise both a curved surface and a plurality of non-coplanar flat surfaces, with the particles arranged on both.
(4) In a third aspect of the reaction vessel of the present invention, the solid support is a spiral-shaped member.
   Since the surface of a spiral member includes a curved surface, the particles can be arranged three-dimensionally within the reaction chamber by arranging the particles three-dimensionally on the curved surface. An elongated, flexible member formed in a spiral shape can be used, for example, as the spiral member. Specific examples of elongated shapes include thread shapes, cord shapes, rod shapes, and tape shapes. If the elongated member is composed of a material with shape retentive properties, such as a metal, then the elongated member itself can be formed into a spiral shape. If the elongated member does not have such shape retentive properties, then it can be formed into a spiral shape by coiling it around a shaft member. As long as the shaft member can serve as the core around which the other material is wound, there are no particular restrictions on its shape or structure, but examples include rod members, solid cylindrical members, hollow cylindrical members, solid prismatic members, and hollow prismatic members.
(5) In a fourth aspect of the reaction vessel of the present invention, the solid support is a member obtained by bending and/or curving a flexible sheet member.
   Since the surface of a member produced by curving a flexible sheet member includes a curved surface, the particles can be arranged three-dimensionally within the reaction chamber. Also, since the surface of a member produced by bending a flexible sheet member includes a plurality of non-coplanar flat surfaces, the particles as a whole can be arranged three-dimensionally within the reaction chamber by arranging the particles one- or two-dimensionally on these flat surfaces.
   "Flexible" as used here means able to be deformed into a desired shape by bending, curving, etc., and there are no particular restrictions on the material, thickness, etc., of the sheet member as long as it is flexible. Examples of shapes of the member obtained by curving a sheet member include U-shaped, corrugated, and cylindrical, and examples of shapes of the member obtained by bending a sheet member include V-shaped, open box section-shaped, serrated, and prismatic.
   The particles may be arranged on just one side of the sheet member, but from the standpoint of improving reaction efficiency between the target substance in the liquid sample and the reactive substance on the particle surface, it is preferable to arrange the particles on both sides.
(6) In a fifth aspect of the reaction vessel of the present invention, the particles are immobilized at specific locations on the surface of the solid support according to the type of reactive substance.
   With the reaction vessel of the present invention, the types of reactive substance immobilized on the surfaces of the various particles may be the same or different, but with the reaction vessel pertaining to this aspect, different reactive substances are immobilized on the surfaces of the various particles, and the particles are immobilized at specific locations on the surface of the solid support according to the type of reactive substance. As a result, the types of reactive substance immobilized on the surface of the various particles can be identified based on the locations where the particles are immobilized on the solid support, making it possible to analyze in parallel the reactivity with the target substance for a plurality of types of reactive substance.
   "Specific locations on the solid support" as used here means predetermining the immobilization locations of the various particles according to the types of reactive substance immobilized on the surface of the various particles.
   The locations where the particles are immobilized are adjusted so that there will be no cross-contamination between particles on which different reactive substances have been immobilized in the course of immobilizing the particles on the solid support surface. In order to prevent cross-contamination between particles on which different reactive substances have been immobilized, a plurality of recesses may be formed in the solid support, and the particles immobilized in the various corresponding recesses.
(7) In a sixth aspect of the reaction vessel of the present invention, the particles contain a specific labeled substance according to the type of reactive substance.
   With the reaction vessel pertaining to this aspect, different reactive substances are immobilized on the surfaces of various particles, and each type of particle has a specific labeled substance corresponding to the type of reactive substance. The type of reactive substance immobilized on the surface of each particle can be identified on the basis of the type of labeled substance had by that particle, making it possible to analyze in parallel the reactivity with the target substance for a plurality of types of reactive substance.
   "Specific labeled substance" as used here means predetermining the type of labeled substance had by each particle according to the type of reactive substance immobilized on the surface of that particle.
   Specific examples of labeled substances include fluorescent dyes (such as Marine Blue, Cascade Blue, Cascade Yellow, Fluorescein, Rhodamine, Phycoerythrin, CyChrome, PerCP, Texas Red, Allophycocyanin, PharRed, and so forth; Cy2, Cy3, Cy3.5, Cy5, C7, and other such Cy-based dyes; Alexa-488, Alexa-532, Alexa-546, Alexa-633, Alexa-680, and other such Alexa-based dyes; and Bodipy FL, Bodipy TR, and other such Bodipy-based dyes) and radioactive isotopes (such as ³H, ¹⁴C, ³²P, ³³P, ³⁵S, and ¹²⁵I). When a fluorescent dye is used as the labeled substance, a wide range of labeling is possible by combining different types and amounts of fluorescent dye.
   Labeling with a fluorescent dye can be accomplished, for example, by reacting particles onto whose surface amino groups have been introduced with a fluorescent dye having an active ester, or by reacting particles onto whose surface carboxyl groups or amino groups have been introduced with a fluorescent dye having a functional group (such as an amino group) capable of undergoing a bonding reaction with a carboxyl group, or with a fluorescent dye having a functional group (such as a carboxyl group) capable of undergoing a bonding reaction with an amino group, in the presence of a carbodiimide such as 1-ethyl-3-(3-dimethylaminopropyl)-3-ethylcarbodimide hydrochloride (EDC). Labeling of the particles with a fluorescent dye can also be accomplished by adding a fluorescent dye to the reaction solution ahead of time in the course of synthesizing the particles by polymerization reaction, or by adding a fluorescent dye that is reactive with radicals remaining immediately after completion of a radical polymerization reaction.
(8) In a seventh aspect of the reaction vessel of the present invention, the solid support or the particles have on the surface thereof a polymer that exhibits adhesive force upon being dried, and the particles are immobilized on the surface of the solid support by the adhesive force of the polymer.
   With the reaction vessel pertaining to this aspect, a polymer that is in a hydrous state is interposed between the solid support and the particles, and this polymer is then dried, which allows the particles to be immobilized very easily on the surface of the solid support.
   Examples of polymers that exhibit adhesive force upon being dried include proteins and polyvinyl alcohols. The adhesive force exhibited by these polymers upon drying is maintained even if the surface of the solid support on which the particles are immobilized is soaked.
(9) In an eighth aspect of the reaction vessel of the present invention, the particles are magnetic particles, and the particles are immobilized on the surface of the solid support by magnetism.
   With the reaction vessel pertaining to this aspect, the immobilization procedure can be carried out with ease by utilizing magnetic interaction in the immobilization of the particles onto the solid support. Also, a binding mechanism with which the binding partners (the solid support and the particles) will not readily separate can be achieved by adjusting the strength of the magnetic force.
   "Magnetic particles" as used here means particles containing a magnetic material, and specific examples of magnetic particles include particles comprising iron hydroxide, iron oxide hydrate, γ-Fe₂O₃, Fe₃O₄, and so forth.
(10) In a ninth aspect of the reaction vessel of the present invention, a magnet is provided to the solid support, and the particles are immobilized on the surface of the solid support by the magnetic force of the magnet.
   With the reaction vessel pertaining to this aspect, there are no particular restrictions on the location where the magnet is provided, but if the solid support has an internal space, such as when it is in the form of a hollow cylinder or prism, for instance, the magnet can be fitted inside this internal space. Specific examples of the magnet include permanent magnets, electromagnets, and superconducting magnets.
(11) In a tenth aspect of the reaction vessel of the present invention, the solid support is composed of magnet, and the particles are immobilized on the surface of the support by the magnetic force of the magnet.
(12) In an eleventh aspect of the reaction vessel of the present invention, the magnetic flux density on the surface of the solid support is uniform.
   With the reaction vessel pertaining to this aspect, because the magnetic flux density on the surface of the solid support is uniform, the magnetic particles can be reliably immobilized at the specified locations on the solid support surface. Therefore, cross-contamination between particles can be effectively prevented when different reactive substances are immobilized on the surfaces of the various particles..
(13) In a twelfth aspect of the reaction vessel of the present invention, the reactive substance is a biological substance.
(14) In a thirteenth aspect of the reaction vessel of the present invention, the biological substance is nucleic acid or protein.
   The reaction vessel pertaining to this aspect can be used in the same applications as a DNA array or protein array.
(15) In a fourteenth aspect of the reaction vessel of the present invention, the reaction vessel main body is made of a light-permeable material.
   With the reaction vessel pertaining to this aspect, because the reaction vessel main body is made of a light-permeable material, light emitted from inside the reaction chamber (such as fluorescent light or chemiluminescence) can be detected on the outside of the reaction vessel. If light emitted from inside the reaction chamber serves as an index of a reaction having occurred within the reaction chamber (such as whether or not there is a reaction between the target substance and the reactive substance), then the reaction result can be confirmed by detecting light emitted from inside the reaction chamber. For instance, a liquid sample containing a target substance that has been fluorescent-labeled is placed inside the reaction chamber, and the target substance and reactive substance are brought into contact, after which the liquid sample is removed from the reaction chamber and the inside the reaction chamber is washed as needed with a washing liquid, and the light emitted from inside the reaction chamber is then detected, allowing confirmation of whether a reaction took place between the target substance and the reactive substance.
   There are no particular restrictions on the type of light-permeable material, as long as the material is transparent or semi-transparent and has the strength required of the reaction vessel main body, but specific examples of light-permeable materials include plastic and glass.
(16) In a fifteenth aspect of the reaction vessel of the present invention, the reaction vessel main body has a liquid flow inlet/outlet communicating with the inside of the reaction chamber.
   With the reaction vessel pertaining to this aspect, the flow of various liquids into and out of the reaction chamber, such as introducing the liquid sample into the reaction chamber, removing the liquid sample from the reaction chamber, introducing a washing liquid into the reaction chamber, or removing the washing liquid from the reaction chamber, can be performed very easily via the liquid flow inlet/outlet communicating with the reaction chamber.
(17) The first reaction apparatus of the present invention comprises the reaction vessel pertaining to the fourteenth aspect (see (15) above), a light source for directing light into the reaction chamber of the reaction vessel, and a detecting element for detecting light from inside the reaction chamber.
   With the reaction apparatus of the present invention, the irradiation of the inside of the reaction chamber with light and the detection of light from inside the reaction chamber can be automated.
(18) The second reaction apparatus of the present invention comprises the reaction vessel pertaining to the fifteenth aspect (see (16) above), and a liquid suction/discharge apparatus for the inflow of liquid into the reaction chamber of the reaction vessel and the outflow of liquid from the reaction chamber through the liquid flow inlet/outlet of the reaction vessel.
   With the reaction apparatus of the present invention, the flow of various liquids into and out of the reaction chamber, such as introducing the liquid sample into the reaction chamber, removing the liquid sample from the reaction chamber, introducing a washing liquid into the reaction chamber, or removing the washing liquid from the reaction chamber, can be automated.
(19) The method of the present invention for producing a three-dimensional particle array comprises the following steps (a) to (c):
   (a) spotting a particle-containing liquid all at once at a plurality of locations arranged in one or two dimensions on the surface of a flexible solid support;
   (b) immobilizing the particles in the particle-containing liquid on the surface of the solid support; and
   (c) deforming the solid support so as to arrange the particles in three dimensions on the surface of the solid support.

   A three-dimensional particle array can be efficiently produced by spotting a particle-containing liquid all at once at a plurality of locations on a solid support surface, but in the spotting of the particle-containing liquid all at once at a plurality of locations on the solid support surface, the spotting operation is easier when the spotting is done at a plurality of locations arranged one-or two-dimensionally than when the spotting is done at a plurality of locations arranged three-dimensionally. In view of this, with the method of the present invention for producing a three-dimensional particle array, a particle-containing liquid is spotted all at once at a plurality of locations arranged in one or two dimensions on the surface of a flexible solid support, after which the solid support is deformed so that the particles will be arranged in three dimensions on the surface of the solid support.
   "Three-dimensional particle array" as used here means a solid support on the surface of which are arranged a plurality of particles, and the solid support placed in the reaction chamber of the reaction vessel of the present invention corresponds to this "three-dimensional particle array."
   There are no particular restrictions on the solvent of the particle-containing liquid, as long as it does not corrode the particles or the solid support, and a suitable solvent can be selected as dictated by the binding mechanism between the particles and solid support and other such factors. The reactive substance need not be immobilized on the surface of the particles contained in the particle-containing liquid, but from the standpoint of efficiently producing a three-dimensional particle array that can be utilized in the reaction vessel of the present invention, it is preferable for the reactive substance to be immobilized on the particle surface. If a reactive substance is immobilized on the particle surface, then it is preferable for the particle-containing liquid to be spotted at specific locations according to the type of reactive substance.
   A solid support is selected that allows a particle-containing liquid to be spotted in one or two dimensions on its surface. Examples of such a solid support include members in the form of thread, cord, a tape, or a sheet. The material of the solid support is selected so that the solid support will be flexible.
   The spotting in step (a) can be performed using a spotting member having a plurality of protrusions arranged in one or two dimensions, for example. Spotting may be performed one or more times in a single location, but performing it a plurality of times is preferable in terms of increasing the amount of particles per spot.
   The immobilization of the particles on the solid support surface in step (b) can be performed by employing a specific binding mechanism between the solid support and the particles.
   The deformation of the solid support in step (c) can be easily performed by taking advantage of the flexibility of the solid support. The particles arranged in one or two dimensions on the solid support surface end up being arranged in three dimensions on the solid support surface when the solid support is deformed. There are no particular restrictions on the deformation configuration of the solid support, as long as the particles can be arranged three-dimensionally on the solid support surface, but when an elongated member in the form of thread, cord, a rod, tape, or the like is used as the solid support, it can be deformed in a spiral shape, for example. When a sheet member is used as the solid support, it can be deformed by bending and/or curving, for example.
(20) In a first aspect of the production method of the present invention, the particle-containing liquids held in each of a plurality of particle-containing liquid holders are spotted all at once at a plurality of locations on the surface of the solid support by using a spotting member having a plurality of protrusions provided according to the arrangement of the plurality particle-containing liquid holders.
   With the production method pertaining to this aspect, a three-dimensional particle array can be produced efficiently by spotting the particle-containing liquid all at once at a plurality of locations on the solid support surface. If the particle-containing liquid is spotted in three dimensions on the solid support surface, the configuration of the various protrusions (such as their length) have to be appropriately varied according to the configuration of the solid support surface, so spotting members of the same configuration cannot be used. In contrast, with the production method pertaining to this aspect, since the particle-containing liquid is spotted in one or two dimensions on the solid support surface, there is no need to vary the configuration of the protrusions according to the configuration of the solid support surface, so spotting members of the same configuration can be used repeatedly. It is therefore possible to automate the spotting of the particle-containing liquid.
   There are no particular restrictions on the structure of the particle-containing liquid holders, as long as they can hold the particle-containing liquid, but these particle-containing liquid holders can be formed in a plastic plate as recesses having an opening at the upper end, for example. There are no particular restrictions on the number of particle-containing liquid holders, as long as there are more than one, but a matrix of 8 x 12 holders can be formed in a plastic plate, for example.
   There are no particular restrictions on the shape, structure, and so forth of the protrusions, as long as they protrude into the particle-containing liquid holders, retain the particle-containing liquid contained in the particle-containing liquid holders, and allow the retained particle-containing liquid to be spotted by contact with the solid support. Specific examples of the protrusions include protrusions that are pointed at the tip, protrusions with a recess formed at the tip, and protrusions with a hook-shaped tip.
(21) In a second aspect of the production method of the present invention, the solid support is a sheet member, and the sheet member is bent and/or curved in the step (c).
   With the production method pertaining to this aspect, the sheet member is deformed by being bent and/or curved. Examples of shapes of the member obtained by curving a sheet member include U-shaped, corrugated, and cylindrical, and examples of shapes of the member obtained by bending a sheet member include V-shaped, open box section-shaped, serrated, and prismatic.
   If a sheet member is used as the solid support, the particle-containing liquid may be spotted on just one side of the sheet member in step (a), but spotting on both sides is preferable.
(22) In a third aspect of the production method of the present invention, the solid support is an elongated member, and the elongated member is deformed into a spiral shape in the step (c).
   With the production method pertaining to this aspect, an elongated member is deformed into a spiral shape. Specific examples of elongated shapes include thread shapes, cord shapes, rod shapes, and tape shapes. The elongated member can be formed into a spiral shape by coiling it around a shaft member. If the elongated member is composed of a material with shape retentive properties, such as a metal, then there is no particular need for this shaft member, but a shaft member is necessary if the elongated member does not have such shape retentive properties. As long as the shaft member can serve as the core around which the other material is wound, there are no particular restrictions on its shape or structure, but examples include rod members, solid cylindrical members, hollow cylindrical members, solid prismatic members, and hollow prismatic members.
(23) In a fourth aspect of the production method of the present invention, the particles are magnetic particles.
   With the production method pertaining to this aspect, the particles are easier to manipulate because magnetic particles are used. For example, the particles can be easily trapped by subjecting them to the action of magnetism, so the washing of the particles, the preparation of a high-concentration particle-containing liquid, and so forth can be carried out more easily.
(24) In a fifth aspect of the production method of the present invention, the solid support is composed of magnet.
   With the production method pertaining to this aspect, magnetic particles can be easily immobilized on the solid support by utilizing magnetic interaction. Also, a binding mechanism with which the binding partners (the solid support and the particles) will not readily separate can be achieved by adjusting the strength of the magnetic force.
(25) In a sixth aspect of the production method of the present invention, the magnetic flux density on the surface of the solid support is uniform.

With the production method pertaining to this aspect, because the magnetic flux density on the solid support surface is uniform, magnetic particles can be reliably immobilized at specific locations on the solid support surface. Therefore, cross-contamination between particles can be effectively prevented when different reactive substances are immobilized on the surfaces of the various particles.

### BRIEF DESCRIPTION OF THE DRAWINGS

Fig. 1 is a partial cross section illustrating an embodiment of the reaction apparatus of the present invention;
Fig. 2 is a diagram of the procedure for producing particles on whose surfaces are immobilized probes composed of oligonucleotides or polynucleotides;
Fig. 3 is a diagram of the procedure for producing a three-dimensional particle array using probe-immobilized particles;
Fig. 4 is a diagram of the procedure for producing a three-dimensional particle array using probe-immobilized particles (cont. from Fig. 3);
Fig. 5 is a partial cross section of a dispensing apparatus utilized in the production of probe-immobilized particles;
Fig. 6 is an oblique view illustrating another embodiment of a light irradiation and detection apparatus;
Fig. 7 is an oblique view illustrating another embodiment of a three-dimensional particle array;
Fig. 8 is an oblique view illustrating another embodiment of a three-dimensional particle array; and
Fig. 9(a) is a partial cross section illustrating another embodiment of the reaction vessel main body 21, while Figs. 9(b) and 9(c) are a partial cross section and a top view illustrating another embodiment of a solid support.

### DESCRIPTION OF THE PREFERRED EMBODIMENTS

Embodiments of the present invention will now be described through reference to the drawings.

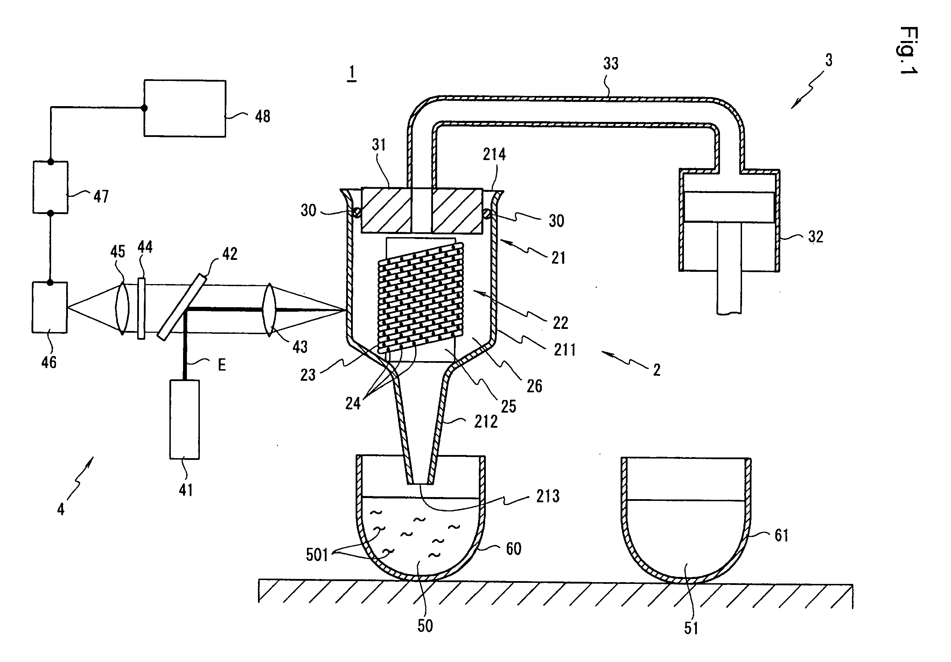

Fig. 1 is a partial cross section illustrating an embodiment of the reaction apparatus of the present invention.

As shown in Fig. 1, a reaction apparatus 1 comprises a reaction vessel 2, a liquid suction/discharge apparatus 3, and a light irradiation and detection apparatus 4.

The reaction vessel 2 comprises a reaction vessel main body 21 having a reaction chamber 26, and a three-dimensional particle array 22 accommodated in the reaction chamber 26. The reaction vessel main body 21 has a cylindrical large diameter component 211 and a cylindrical small diameter component 212 that has a smaller diameter than the large diameter component 211. The lower end of the large diameter component 211 communicates with the upper end of the small diameter component 212. The reaction chamber 26 is formed in the interior of the reaction vessel main body 21, and the reaction chamber 26 is capable of holding a liquid. A liquid flow inlet/outlet 213 that communicates with the reaction chamber 26 is provided to the lower end of the small diameter component 212, so that a liquid can flow into and out of the reaction chamber 26 through the liquid flow inlet/ outlet 213.

The three-dimensional particle array 22 comprises a cylindrical shaft member 25, a cord member 23 that is wound around the shaft member 25, and a plurality of particle groups 24 immobilized at specific locations on the surface of the cord member 23. Each of the particle groups 24 includes a plurality of particles, with the same reactive substance being immobilized on the surface of all the particles included in each particle group 24. The type of reactive substance immobilized on the particle surface differs among the particle groups 24, and each of the particle groups 24 is immobilized at a specific location on the surface of the cord member 23 according to the type of reactive substance immobilized on the particle surfaces. Therefore, the type of reactive substance immobilized on the particle surfaces of the various particle groups 24 can be identified on the basis of the locations where the particle groups 24 are immobilized. The cord member 23 is formed in a spiral shape by coiling it around the shaft member 25, and the plurality of particle groups 24 are arranged three-dimensionally within the reaction chamber 26 by being immobilized on the surface of the cord member 23 formed in a spiral shape.

The liquid suction/discharge apparatus 3 comprises a nozzle component 31 mounted via an O-ring 30 in the upper end opening 214 of the large diameter component 211 of the reaction vessel main body 21, and a cylinder 32 that communicates with the nozzle component 31 via a pipe 33. When the inside of the reaction chamber 26 is depressurized or pressurized, a liquid can be drawn into or discharged from the reaction chamber 26 through the liquid flow inlet/outlet 213.

The light irradiation and detection apparatus 4 comprises a light source 41 that emits excitation light E, a mirror 42, lenses 43 and 45, an optical filter 44, a detector 46, a controller 47 that is electrically connected to the detector 46, and a display device 48 that is electrically connected to the controller 47. The light irradiation and detection apparatus 4 is designed so that the excitation light E emitted from the light source 41 can irradiate the interior of the reaction chamber 26 via the mirror 42 and the lens 43, the fluorescent light from inside the reaction chamber 26 is detected by the detector 46 via the lens 43, the mirror 42, the optical filter 44, and the lens 45, and data is processed by the controller 47 and displayed by the display device 48. Also, a drive device (not shown) allows the light irradiation and detection apparatus 4 to scan by moving up and down, and to scan by rotating 360 degrees around the large diameter component 211, so that the entire reaction chamber 26 can be irradiated with light, and fluorescent light can be detected, by moving the light irradiation and detection apparatus 4.

A reaction is produced in the reaction apparatus 1 by operating the liquid suction/discharge apparatus 3 so that a liquid sample containing the target substance is drawn out through the liquid flow inlet/outlet 213 and into the reaction chamber 26, and the target substance in the liquid sample is brought into contact with the reactive substance on the particle surface of the various particle groups 24 in the reaction chamber 26, and the result of the reaction is detected by the light irradiation and detection apparatus 4.

The reaction apparatus 1 can be used in many different applications by suitably changing the type of reactive substance immobilized on the particle surface of the various particle groups 24. For example, if a probe composed of an oligonucleotide or a polynucleotide is selected as the reactive substance to be immobilized on the particle surface of the various particle groups 24, the reaction apparatus 1 can be used in applications such as determining the base sequences of a target nucleic acid, detecting mutations in a target nucleic acid, polymorphic analysis of a target nucleic acid (SNPs analysis), gene expression profile analysis, and other such applications.

As a usage example of the reaction apparatus 1, gene expression profile analysis using the reaction apparatus 1 will be described through reference to Fig. 1.

As shown in Fig. 1, a vessel 60 is installed beneath the reaction vessel 2, and a liquid sample 50 containing fluorescent-labeled target DNA 501 is held in the vessel 60. The target DNA 501 is fluorescent-labeled DNA obtained by extracted mRNA from a test subject's tissue or cells and subjecting this mRNA to reverse transcription using a fluorescent-labeled nucleotide. The target DNA 501 includes DNA composed of many different base sequences.

The reactive substance immobilized on the particle surface of the various particle groups 24 is an oligonucleotide probe or polynucleotide probe specifically hybridized with a specific gene. The type of probe immobilized on the particle surface of the various particle groups 24 (that is, the type of gene specifically hybridized by the probe) differs among the particle groups 24, and each of the particle groups 24 is immobilized at a specific location on the surface of the cord member 23 according to the type of probe immobilized on the particle surface. Therefore, the type of probe immobilized on the particle surface of the various particle groups 24 can be identified on the basis of the locations where the particle groups 24 are immobilized.

Gene expression profile analysis using the reaction apparatus 1 is performed by going through the following steps 1a to 6a.

In step 1a, the liquid flow inlet/outlet 213 is moved into the vessel 60, the liquid suction/discharge apparatus 3 is operated, and the liquid sample 50 inside the vessel 60 is drawn into the reaction chamber 26. A mechanism (not shown) for moving the reaction vessel 2 up and down is provided to the reaction apparatus 1, and this mechanism allows the liquid flow inlet/outlet 213 to be moved into and retracted from the various vessels.

In step 2a, the target DNA 501 in the reaction chamber 26 is reacted with the probes on the particle surface of the various particle groups 24. When the liquid sample 50 is placed in the reaction chamber 26, the target DNA 501 in the liquid sample 50 disperses throughout the reaction chamber 26, and is present in three dimensions within the reaction chamber 26. Meanwhile, the plurality of particle groups 24 composed of a plurality of particles with probes immobilized on the surfaces thereof are arranged in three dimensions within the reaction chamber 26. Therefore, the reaction site between the target DNA 501 in the liquid sample 50 and the probes on the particle surfaces of the various particle groups 24 is three-dimensional, which makes it more probable that the two reactants will come into contact, and affords higher reaction efficiency between the two.

In step 3a, the liquid suction/discharge apparatus 3 is operated so that the liquid sample 50 in the reaction chamber 26 is drawn through the liquid flow inlet/outlet 213 to the outside of the reaction chamber 26.

In step 4a, the reaction vessel 2 is moved above a vessel 61 containing a washing liquid 51, after which the liquid flow inlet/outlet 213 is moved into the vessel 61, the liquid suction/discharge apparatus 3 is operated, and the washing liquid 51 in the vessel 61 is drawn into the reaction chamber 26. A mechanism (not shown) for moving the reaction vessel 2 to the left and right is provided to the reaction apparatus 1.

In step 5a, the inside of the reaction chamber 26 is washed with the washing liquid 51, after which the liquid suction/discharge apparatus 3 is operated and the washing liquid 51 in the reaction chamber 26 is discharged to the outside of the reaction chamber 26. As a result, the target DNA 501 remaining in the reaction chamber 26 without being hybridized with the probes on the particle surfaces of the various particle groups 24 is removed from the reaction chamber 26.

In step 6a, the light irradiation and detection apparatus 4 is operated so that the inside of the reaction chamber 26 is irradiated with excitation light, and the fluorescent light emitted from the reaction chamber 26 (that is, the fluorescent light emitted by the target DNA 501 hybridized with the probes on the particle surfaces of the any of the particle groups 24) is detected. A gene expressed in a subject's tissue or cells is identified by specifying the site where the fluorescent light is emitted, and identifying the probe hybridized by the target DNA 501 from this site. This allows a subject's gene expression profile to be analyzed, and by correlating a certain disease with the gene expression profile when afflicted with that disease, it is possible to diagnose from the subject's gene expression profile whether the subject is afflicted with the disease.

Determining the base sequences of a target nucleic acid, detecting mutations in a target nucleic acid, polymorphic analysis of a target nucleic acid (SNPs analysis), and so forth using the reaction apparatus 1 can be carried out in the same manner as in steps 1a to 6a using a probe composed of an oligonucleotide or polynucleotide with a known base sequence and immobilized on the particle surface of the various particle groups 24.

The following variations are possible with the reaction apparatus 1, for example. In the variation examples given below, those members and portions that are the same as the members and portions shown in Fig. 1 are numbered the same.

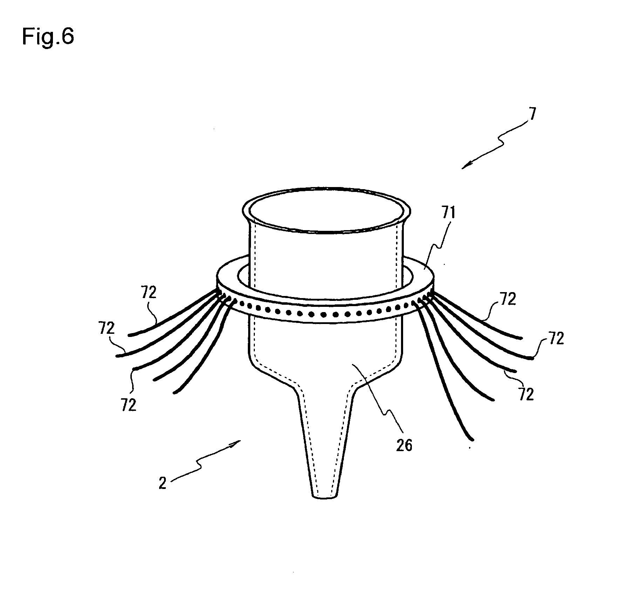

The light irradiation and detection apparatus 4 can be changed to the light irradiation and detection apparatus 7 shown in Fig. 6. The light irradiation and detection apparatus 7 comprises numerous optical fibers 72 whose tips are arranged in a circle, and a support member 71 for supporting the tips of the optical fibers 72. This apparatus is designed so that the inside of the reaction chamber 26 can be irradiated with excitation light through the optical fibers 72, and fluorescent light from inside the reaction chamber 26 can be detected through the optical fibers 72. The light irradiation and detection apparatus 7 also comprises a mechanism (not shown) for moving the support member 71 up and down, and is designed so that the entire reaction chamber 26 can be irradiated with excitation light, and fluorescent light can be detected, by moving the support member 71 up and down.

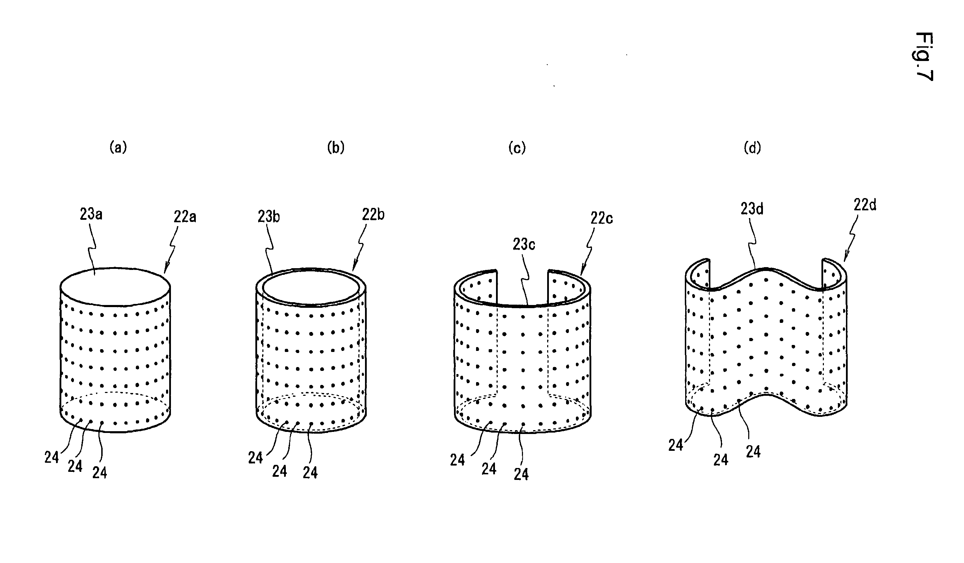

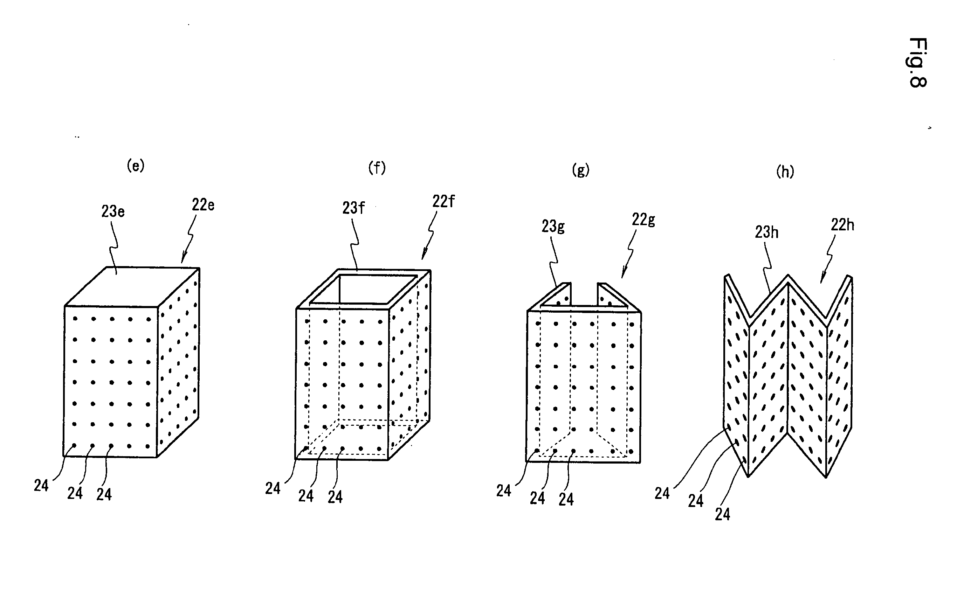

The three-dimensional particle array 22 can be changed to the three-dimensional particle arrays 22a to 22h shown in Figs. 7 and 8. The three-dimensional particle array 22a comprises a solid cylindrical member 23a and a plurality of particle groups 24 immobilized on the sides of the cylindrical member 23a, with the particle groups 24 being arranged three-dimensionally on the sides of the cylindrical member 23a. The three-dimensional particle array 22b comprises a hollow cylindrical member 23b and a plurality of particle groups 24 immobilized on the sides of the cylindrical member 23b, with the particle groups 24 being arranged three-dimensionally on the outer sides of the cylindrical member 23b. The three-dimensional particle arrays 22c and 22d comprise flexible sheet members 23c and 23d and a plurality of particle groups 24 immobilized on both sides of the sheet members 23c and 23d, with the particle groups 24 being arranged three-dimensionally on the surface of the sheet members 23c and 23d due to the curving of the sheet members 23c and 23d. The three-dimensional particle array 22e comprises a solid prismatic member 23e and a plurality of particle groups 24 immobilized on the sides of the prismatic member 23e, with the particle groups 24 being arranged three-dimensionally on the sides of the prismatic member 23e. The three-dimensional particle array 22f comprises a hollow prismatic member 23f and a plurality of particle groups 24 immobilized on the sides of the prismatic member 23f, with the particle groups 24 being arranged three-dimensionally on the sides of the prismatic member 23f. The three-dimensional particle arrays 22g and 22h comprise flexible sheet members 23g and 23h, and a plurality of particle groups 24 immobilized on both sides of the sheet members 23g and 23h, with the particle groups 24 being arranged three-dimensionally on the surface of the sheet members 23g and 23h due to the bending of the sheet members 23g and 23h. With the three-dimensional particle arrays 22e to 22h, the particle groups 24 are arranged two-dimensionally on the planes that constitute the surfaces of the solid prismatic member 23e, the hollow prismatic member 23f, and the bend sheet members 23g and 23h, but since these planes do not all lie in the same plane, the particle groups 24 as a whole are arranged in three dimensions.

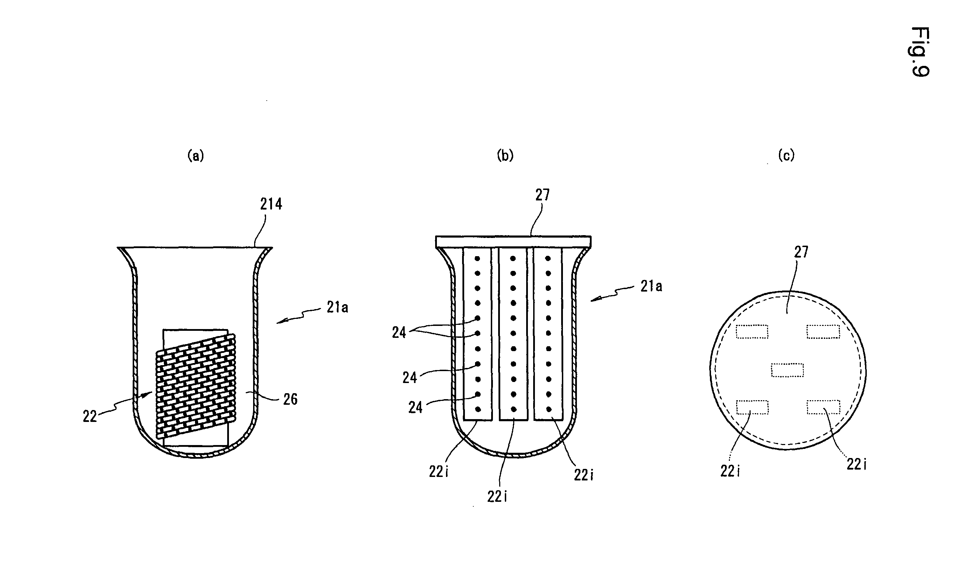

The reaction vessel main body 21 can be changed to the reaction vessel main body 21a shown in Fig. 9(a). The reaction vessel main body 21a has no liquid flow inlet/outlet 213, and consequently the liquid suction/discharge apparatus 3 is also omitted. The flow of liquid into and out of the reaction chamber 26 is carried out via the upper end opening in the reaction vessel main body 21a.

The solid support 22 that is held in the reaction chamber 26 of the reaction vessel main body 21a shown in Fig. 9(a) can be changed to the solid supports 22i shown in Figs. 9(b) and 9.(c). The five solid supports 22i are held inside the reaction chamber 26 in a state of being fixed to a lid member 27 mounted to the upper end opening 214 in the reaction vessel main body 21a. The solid supports 22i are in the form of sheets, with a plurality of particle groups 24 being arranged in one dimension on both sides thereof. The positions of the solid supports 22i inside the reaction chamber 26 are adjusted so that the particle groups 24 will not lie in the same plane, and as a result, the particle groups 24 that are arranged one-dimensionally on the surfaces of the solid supports 22i are as a whole arranged three-dimensionally within the reaction chamber 26.

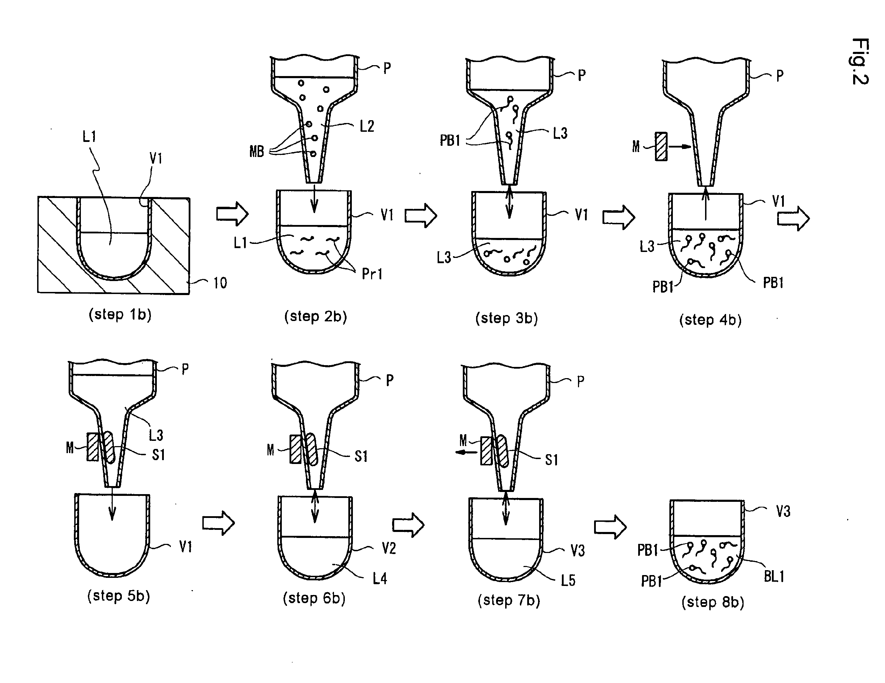

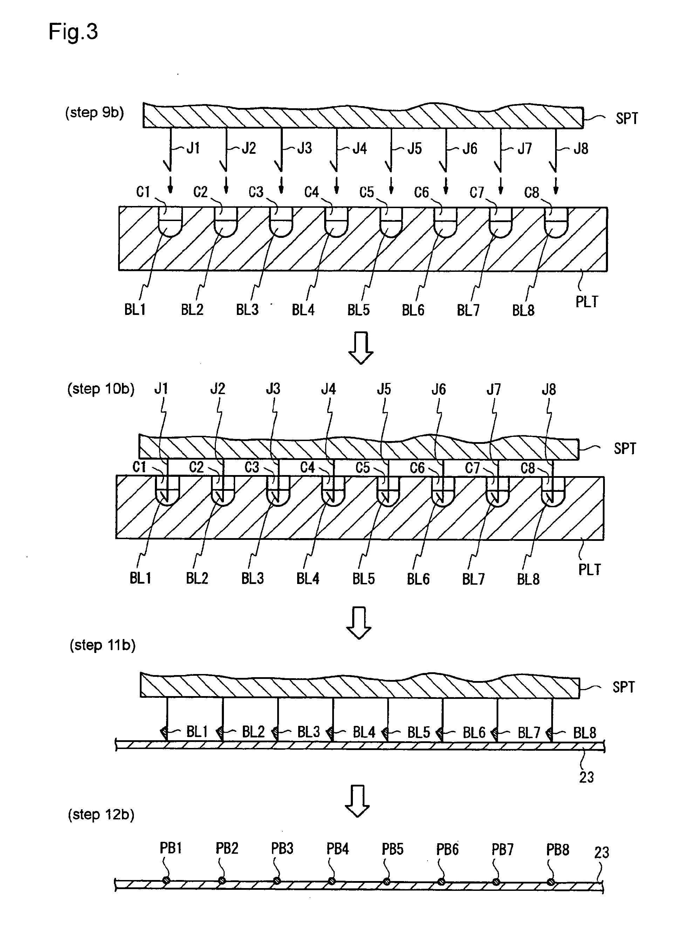

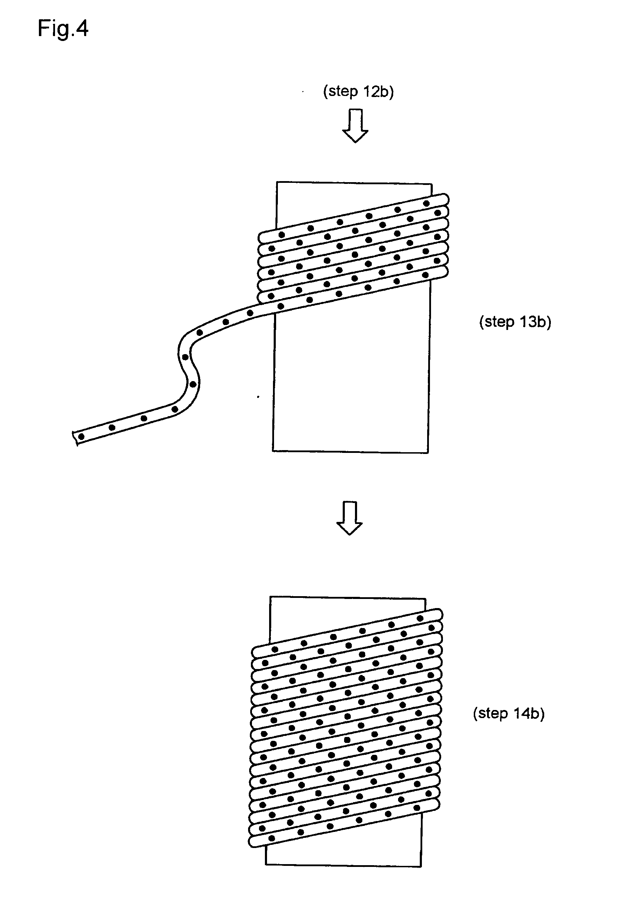

The procedure for producing particles on whose surface is immobilized a probe composed of an oligonucleotide or polynucleotide is illustrated in steps 1b to 8b in Fig. 2, while the procedure for producing the three-dimensional particle array 22 by using these particles is illustrated in steps 9b to 14b in Figs. 3 and 4.

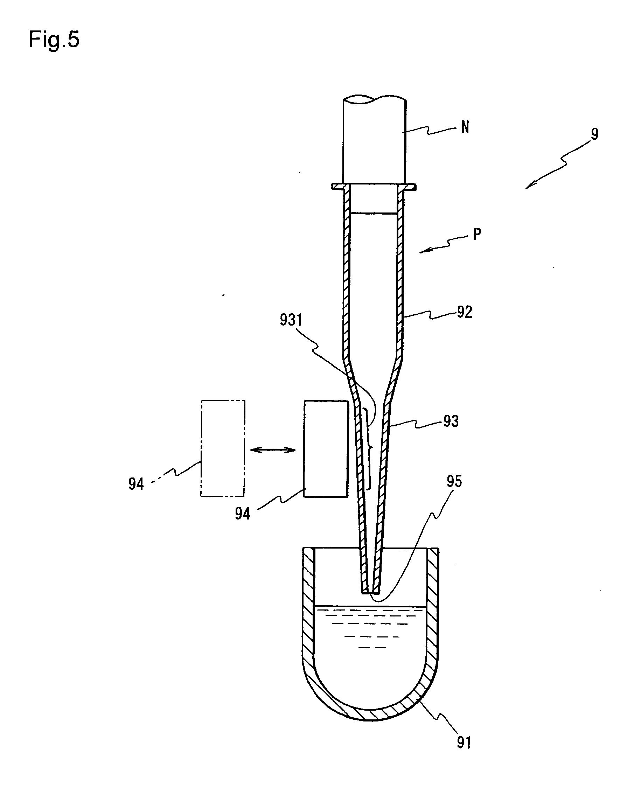

Steps 1b to 8b shown in Fig. 2 are performed using the dispensing apparatus 9 shown in Fig. 5. The dispensing apparatus 9 shown in Fig. 5 comprises a vessel 91 for holding a liquid; a pipette tip P having a tapered tip 95 that is inserted into the vessel 91 for drawing up or discharging liquid, a thicker reservoir 92 for holding a liquid, and a narrow liquid passage 93 allowing communication between the tip 95 and the reservoir 92; an aliquoting unit (not shown) having a nozzle N removably fitted into an opening in the reservoir 92, for drawing liquid into or discharging liquid from the pipette tip P by producing negative or positive pressure inside the pipette tip P; a magnet M provided so as to be able to move closer to or farther away from the outer surface of the liquid passage 93; a magnet drive device (not shown) for moving the magnet M closer to or farther away from the liquid passage 93; and a control device (not shown) for controlling the operation and movement of the aliquoting unit, the engagement and separation of the nozzle N and the pipette tip P, and the movement of the magnet M closer to or farther away from the pipette tip P by the magnet drive device. The liquid passage 93 has a magnetic force action component 931 on which the magnetic force of the magnet M acts, so that when the magnet M is at its position closest to the pipette tip P, magnetic particles can be held against the inner walls of the magnetic force action component 931, and when the magnet M is at its position farthest away from the pipette tip P, the magnetic particles held against the inner walls of the magnetic force action component 931 can be released.

In step 1b, PCR is utilized to prepare a biotinized probe Pr1 composed of a biotinized oligonucleotide or polynucleotide. A PCR liquid L1 is contained in a vessel V1 mounted to a PCR apparatus 10, and the PCR liquid L1 contains a template nucleic acid, a biotinized primer that can be specifically hybridized to this nucleic acid, a PCR buffer, and so forth. When the PCR apparatus 10 is operated to conduct a PCR, the biotinized probe Pr1 in the PCR liquid L1 is amplified.

In step 2b, a particle-containing liquid L2 in the pipette tip P is discharged into the PCR liquid L1 inside the vessel V1. The particle-containing liquid L2 contains magnetic particles MB whose surface is coated with avidin.

In step 3b, suction and discharge with the pipette tip P are performed repeatedly to prepare a mixture L3 of the PCR liquid L1 and the particle-containing liquid L2. Repeated suction and discharge by the pipette tip P causes the biotinized probe Pr1 to be immobilized on the surface of the magnetic particles MB via biotin-avidin bonds, forming probe-immobilized particles PB1. A plurality of biotinized probes Pr1 are immobilized (that is, clustered) on the surface of the probe-immobilized particles PB1.

In step 4b, the mixture L3 containing the probe-immobilized particles PB1 is drawn into the pipette tip P, and the magnet M is moved closer to the pipette tip P. As the probe-immobilized particles PB1 move past the magnetic force action component 931 of the pipette tip P, they are trapped on the inner wall of the magnetic force action component 931 by the magnetic force of the magnet M installed on the outside of the pipette tip P, forming a particle cluster S1 of the probe-immobilized particles PB1.

In step 5b, the particle cluster S1 is left on the inner wall of the pipette tip P, and the mixture L3 minus the particle cluster S1 is discharged into the vessel V1.

In step 6b, the particle cluster S1 is left on the inner wall of the pipette tip P, the pipette tip P is moved to the installation site of a vessel V2 holding a washing liquid L4, and the pipette tip P repeatedly draws in and discharges the washing liquid L4. This washes the particle cluster S1, removing any impurities contained in the particle cluster S1 (such as biotinized probes Pr1 not immobilized on the magnetic particles MB, or template nucleic acid or primer contained in the PCR liquid L1).

In step 7b, the particle cluster S1 is left on the inner wall of the pipette tip P, the pipette tip P is moved to the installation site of a vessel V3 holding a buffer liquid L5, the pipette tip P repeatedly draws in and discharges the buffer liquid L5, and the magnet M is moved away from the pipette tip P.

Thus, in step 8b, a particle-containing liquid BL1 containing the probe-immobilized particles PB1 is prepared in a vessel V3.

Steps 1b to 8b are carried out repeatedly to prepare biotinized probes Pr1, Pr2, ..., Pr(n) (where n is any natural number; the same applies hereinafter) each having a different base sequence, and prepare particle-containing liquids BL1, BL2, ..., BL(n) each containing probe-immobilized particles PB1, PB2, ..., PB(n).

In step 9b, a plate PLT is readied in which an 8 x 48 matrix of particle-containing liquid holders C1 to C384 are provided at equidistant spacing, and particle-containing liquids BL1 to BL384 are put into the particle-containing liquid holders C1 to C384, respectively. The plate PLT is provided with 48 rows each consisting of 8 particle-containing liquid holders, with the first row consisting of particle-containing liquid holders C1 to C8, the second row particle-containing liquid holders C9 to C16, the third row particle-containing liquid holders C17 to C24, and so forth, with the forty-eighth row consisting of particle-containing liquid holders C377 to C384. Next, in step 9b a spotting member SPT is readied which has 8 protrusions J1 to J8 provided so as to correspond to the layout of the particle-containing liquid holders, and the protrusions J1 to J8 of the spotting member SPT are moved into the first row of particle-containing liquid holders C1 to C8. As shown in Fig. 3, the protrusions J1 to J8 are hook-shaped so that they can more easily hold the particle-containing liquid. The protrusions J1 to J8 are all substantially the same length, so that they come into contact with the surface of the cord member 23 all at once.

In step 10b, the protrusions J1 to J8 of the spotting member SPT are immersed in the particle-containing liquids BL1 to BL8 inside the respective particle-containing liquid holders C1 to C8 so that the particle-containing liquids BL1 to BL8 are held in the respective protrusions J1 to J8 of the spotting member SPT.

In step 11b, the protrusions J1 to J8 of the spotting member SPT are brought into contact with the surface of the cord member 23 all at once, and the particle-containing liquids BL1 to BL8 are spotted all at once at specific locations arranged one-dimensionally on the surface of the cord member 23.

In step 12b, the particle-containing liquids BL1 to BL8 spotted on the surface of the cord member 23 are dried, so that the probe-immobilized particles PB1 to PB8 are immobilized on the surface of the cord member 23. Steps 9b to 12b are repeated for the particle-containing liquid holders in the second to forty-eighth rows, which immobilizes the probe-immobilized particles PB1 to PB384 at specific locations on the surface of the cord member 23. While steps 9b to 14b are being repeated for the particle-containing liquid holders in the second to forty-eighth rows, the used spotting member SPT may be washed for reuse, or unused spotting members SPT may be used.

Particles whose surface is coated with a protein, as is the case with the probe-immobilized particles PB1 to PB384 (the surface of the probe-immobilized particles PB1 to PB384 is coated with avidin) can be easily immobilized on the surface of the cord member 23 by drying the spotted particle-containing liquids. The spotted particle-containing liquids BL1 to BL384 each contain a plurality of the probe-immobilized particles PB1 to PB384, and these probe-immobilized particles PB1 to PB384 form particle groups that are immobilized at specific locations on the surface of the cord member 23.

The particle-containing liquids BL1 to BL384 are spotted at specific locations arranged one-dimensionally on the surface of the cord member 23, but the spotted particle-containing liquids BL1 to BL384 sometimes penetrate around the periphery of the cord member 23, in which case the probe-immobilized particles PB1 to PB384 end up being arranged three-dimensionally around the cord member 23. Therefore, just because the particle-containing liquids BL1 to BL384 are spotted one-dimensionally on the surface of the cord member 23, that does not necessarily mean that the probe-immobilized particles PB1 to PB384 are arranged one-dimensionally on the surface of the cord member 23. In step 13b discussed below, the probe-immobilized particles PB1 to PB384 are finally arranged three-dimensionally, so there is no problem whatsoever with the probe-immobilized particles PB1 to PB384 being immobilized three-dimensionally on the surface of the cord member 23 at the stage when the probe-immobilized particles PB1 to PB384 are immobilized.

In step 13b, the cord member 23 on which the probe-immobilized particles PB1 to PB384 have been immobilized is coiled around the shaft member 25.

Thus, in step 14b, the three-dimensional particle array 22 is produced. With the three-dimensional particle array 22, the probe-immobilized particles PB1 to PB384 each form a particle group, and these groups are arranged three-dimensionally on the surface of the cord member 23.

In addition to the cord member 23, the solid support on which the probe-immobilized particles PB1 to PB384 are immobilized can also be a flexible solid support of various other shapes. For instance, when a flexible tape member is used, the particle-containing liquids BL1 to BL384 are spotted at specific locations arranged one- or two-dimensionally on the surface of the tape member, after which the tape member is coiled around the shaft member 25 to produce a three-dimensional particle array (not shown). When a flexible sheet member is used, the particle-containing liquids BL1 to BL384 are spotted at specific locations arranged one- or two-dimensionally on both sides of the sheet member, after which the sheet member is curved and/or bent to produce the three-dimensional particle arrays 22c, 22d, 22g, and 22h shown in Figs. 7(c), 7(d), 8(g) and 8(h).

Because the probe-immobilized particles PB1 to PB384 include the magnetic particles MB (see step 2b), if a magnet is used as the solid support on which the probe-immobilized particles PB1 to PB384 are immobilized, then the magnetic interaction between the probe-immobilized particles PB1 to PB384 and the solid support can be utilized to facilitate the immobilization of the probe-immobilized particles PB1 to PB384.

### INDUSTRIAL APPLICABILITY

The present invention provides a reaction vessel comprising a three-dimensional particle array, with which reaction efficiency is increased by raising the probability of encounter between the target substance in the liquid sample and the reactive substance immobilized on the particle surface, and a reaction apparatus in which said reaction vessel is utilized.

The present invention also provides a method for producing a three-dimensional particle array, with which a three-dimensional particle array can be produced more efficiently.

## Claims

1. A reaction vessel, comprising a reaction vessel main body having a reaction chamber capable of accommodating a liquid sample, a solid support placed in the reaction chamber, and a plurality of particles on which a specific reactive substance is immobilized, wherein the particles are arranged in three dimensions inside the reaction chamber while immobilized on the surface of the solid support.

2. The reaction vessel claimed in Claim 1, wherein a plurality of solid supports are placed in the reaction chamber, and the particles are arranged in one, two, or three dimensions on the surface of each of the supports.

3. The reaction vessel claimed in Claim 1 or 2, wherein the surface of the solid support comprises a curved surface or a plurality of non-coplanar flat surfaces, and the particles are either arranged in three dimensions on the curved surface or arranged in one or two dimensions on the plurality of flat surfaces.

4. The reaction vessel claimed in Claim 3, wherein the solid support is a spiral-shaped member.

5. The reaction vessel claimed in Claim 3, wherein the solid support is a member obtained by bending and/or curving a flexible sheet member.

6. The reaction vessel claimed in Claim 1 or 2, wherein the particles are immobilized at specific locations on the surface of the solid support according to the type of reactive substance.

7. The reaction vessel claimed in Claim 1 or 2, wherein the particles contain a specific labeled substance according to the type of reactive substance.

8. The reaction vessel claimed in Claim 1 or 2, wherein the solid support or the particles have on the surface thereof a polymer that exhibits adhesive force upon being dried, and the particles are immobilized on the surface of the solid support by the adhesive force of the polymer.

9. The reaction vessel claimed in Claim 1 or 2, wherein the particles are magnetic particles, and the particles are immobilized on the surface of the solid support by magnetism.

10. The reaction vessel claimed in Claim 9, wherein a magnet is provided to the solid support, and the particles are immobilized on the surface of the solid support by the magnetic force of the magnet.

11. The reaction vessel claimed in Claim 9, wherein the solid support is composed of magnet, and the particles are immobilized on the surface of the support by the magnetic force of the magnet.

12. The reaction vessel claimed in Claim 9, wherein the magnetic flux density on the surface of the solid support is uniform.

13. The reaction vessel claimed in Claim 1 or 2, wherein the reactive substance is a biological substance.

14. The reaction vessel claimed in Claim 13, wherein the biological substance is nucleic acid or protein.

15. The reaction vessel claimed in Claim 1 or 2, wherein the reaction vessel main body is made of a light-permeable material.

16. The reaction vessel claimed in Claim 1 or 2, wherein the reaction vessel main body has a liquid flow inlet/outlet communicating with the inside of the reaction chamber.

17. A reaction apparatus, comprising the reaction vessel claimed in Claim 15, a light source for directing light into the reaction chamber of the reaction vessel, and a detecting element for detecting light from inside the reaction chamber.

18. A reaction apparatus, comprising the reaction vessel claimed in Claim 16, and a liquid suction/discharge apparatus for the inflow of liquid into the reaction chamber of the reaction vessel and the outflow of liquid from the reaction chamber through the liquid flow inlet/outlet of the reaction vessel.

19. A method for producing a three-dimensional particle array, comprising the following steps (a) to (c):
(a) spotting a particle-containing liquid all at once at a plurality of locations arranged in one or two dimensions on the surface of a flexible solid support;
(b) immobilizing the particles in the particle-containing liquid on the surface of the solid support; and
(c) deforming the solid support so as to arrange the particles in three dimensions on the surface of the solid support.

20. The method claimed in Claim 19, wherein the particle-containing liquids held in each of a plurality of particle-containing liquid holders are spotted all at once at a plurality of locations on the surface of the solid support by using a spotting member having a plurality of protrusions provided according to the arrangement of the plurality particle-containing liquid holders.

21. The method claimed in Claim 19, wherein the solid support is a sheet member, and the sheet member is bent and/or curved in the step (c).

22. The method claimed in Claim 19, wherein the solid support is an elongated member, and the elongated member is deformed into a spiral shape in the step (c).

23. The method claimed in Claim 19, wherein the particles are magnetic particles.

24. The method claimed in Claim 23, wherein the solid support is composed of magnet.

25. The method claimed in Claim 24, wherein the magnetic flux density on the surface of the solid support is uniform.
